Europäisches Patentamt

European Patent Office

Office européen des brevets

(19)

(11) EP 1 599 050 A1

(12) DEMANDE DE BREVET EUROPEEN

(43) Date de publication:
23.11.2005 Bulletin 2005/47

(51) Int Cl.$^7$: H04N 9/04

(21) Numéro de dépôt: 04291269.1

(22) Date de dépôt: 18.05.2004

(84) Etats contractants désignés:
AT BE BG CH CY CZ DE DK EE ES FI FR GB GR HU IE IT LI LU MC NL PL PT RO SE SI SK TR
Etats d'extension désignés:
AL HR LT LV MK

(71) Demandeur: Tribvn
92200 Neuilly-sur-Seine (FR)

(72) Inventeurs:
• Klossa, Jacques
  92200 Neuilly-Sur-Seine (FR)

• Tarin, Marc
  14160 Dives-Sur-Mer (FR)
• Horain, Patrick
  91000 Evry (FR)
• Parrein, Benoît
  75018 Paris (FR)

(74) Mandataire: Breese, Pierre
BREESE DERAMBURE MAJEROWICZ
38, avenue de l'Opéra
75002 Paris (FR)

(54) Procédé de dématriçage d'image

(57)   La présente invention concerne le domaine du traitement d'image.

La présente invention concerne plus particulièrement un procédé de dématriçage d'une image issue d'un flux de données acquises suivant un motif spécifique de composantes chromatiques et possédant au moins une composante sur-échantillonnée organisée selon au moins une direction privilégiée caractérisé en ce qu'il comprend au moins

- une étape de rotation de ladite composante sur-échantillonnée selon un angle correspondant à ladite direction privilégiée ;
- une étape de ré-échantillonnage des composantes sous-échantillonnées sur les pixels de ladite composante sur-échantillonnée.

Figure 3

EP 1 599 050 A1

**Description**

La présente invention se rapporte au domaine du traitement numérique de l'image.

La présente invention se rapporte plus particulièrement à un procédé de dématriçage (demosaicing en anglais) d'une image représentée sous un format spécifique.

Les procédés de dématriçage sont des méthodes d'interpolation des couleurs dépendant du format des données constituant l'image.

Un tel format issu d'un filtrage de la couleur suivant un motif périodique est décrit par exemple dans le brevet US 3,971,065 (Bayer). Dans ce cas particulier, le filtrage est obtenu par une matrice de filtres de couleur, rouge, vert, bleu (RVB) par exemple. Chaque pixel de la matrice du capteur contient alors l'information provenant d'une seule composante, rouge, vert, ou bleu. La reconstitution d'une image au format classique Rouge-Vert-Bleu (RVB) pour chacun des pixels nécessite donc d'estimer en chaque pixel les deux composantes manquantes à partir de l'information couleur disponible. Cette interpolation des composantes colorées est appelée dématriçage.

Lors du colloque CORESA qui se tiendra les 25 et 26 mai 2004, les inventeurs présenteront une comparaison de différentes stratégies de dématriçage et de codage du point de vue de leur impact sur les performances de la compression. Les procédés de dématriçage considérés ici sont issus de l'art antérieur. En particulier, il est fait référence à la publication de Lee et Ortega « A Novel Approach of Image Compression in Digital Cameras with Bayer Color Filters » (IEEE Proc. Int. 2001). Cette publication ne concerne pas un procédé de dématriçage mais une méthode de codage exploitant un changement d'espace colorimétrique du domaine RVB au domaine YCrCb (Luminance-Chrominance) suivi d'une rotation de la composante Y avant codage-décodage puis dématriçage. Ce procédé n'est pas une méthode d'interpolation des couleurs comme dans la présente invention.

Dans le domaine du dématriçage, l'art antérieur connaît par exemple des méthodes d'interpolation point par point, comme dans le brevet US 5,629,734. Ce brevet décrit une interpolation des couleurs manquantes grâce aux valeurs des couleurs les plus proches, et ce, pour chaque point de la matrice des couleurs.

Cependant, l'interpolation effectuée point par point a l'inconvénient d'un mauvais rendement en multipliant le volume des données brutes de façon importante (par 3 dans le cas d'un format à 3 composantes RVB).

La présente invention entend remédier aux inconvénients de l'art antérieur en proposant un procédé de dématriçage ayant un meilleur rendement, tout en préservant la qualité initiale de l'information.

Pour ce faire, la présente invention est du type décrit ci-dessus et elle est remarquable, dans son acception la plus large, en ce qu'elle concerne un procédé de dématriçage d'une image issue d'un flux de données acquises suivant un motif spécifique de composantes chromatiques et possédant au moins une composante sur-échantillonnée organisée selon au moins une direction privilégiée caractérisé en ce qu'il comprend au moins les étapes suivantes:

- une rotation de ladite composante sur-échantillonnée selon un angle correspondant à ladite direction privilégiée et
- un ré-échantillonnage des composantes sous-échantillonnées sur les pixels de ladite composante sur-échantillonnée.

Selon un premier mode de réalisation, ladite direction privilégiée correspond à un angle de 45° par rapport au repère de visualisation en ligne et en colonne.

Selon un second mode de réalisation, ladite direction privilégiée correspond à un angle 0° par rapport au repère de visualisation en ligne et en colonne.

De préférence, au cas où lesdites composantes chromatiques correspondent au format Rouge-Vert-Bleu, ladite composante sur-échantillonnée est la composante verte.

On comprendra mieux l'invention à l'aide de la description, faite ci-après à titre purement explicatif, d'un mode de réalisation de l'invention, en référence aux figures annexées où :

- la figure 1 représente un motif élémentaire V-B-V-R et une succession de tels motifs issus du filtre de Bayer avec une composante sur-échantillonnée « en quinconce » en 1A, et un motif élémentaire et une succession de motifs avec une composante sur-échantillonnée « droite » en 1B ;
- la figure 2 représente le ré-échantillonnage des composantes rouge et bleue sur les pixels échantillons de la composante verte ;
- la figure 3 illustre le procédé de lecture des pixels issus du ré-échantillonnage ;
- la figure 4 représente une image obtenue par le procédé de rotation selon l'invention.

Les périphériques de visualisation d'image (écran ou imprimantes) requièrent comme source numérique des matrices de pixels organisées en ligne et en colonne avec un nombre fixe de composantes colorées par pixel. Par contre, lors de l'acquisition le signal est échantillonné selon un motif géométrique n'ayant pas ces contraintes. On s'intéresse alors à deux types de motifs (droit et en quinconce).

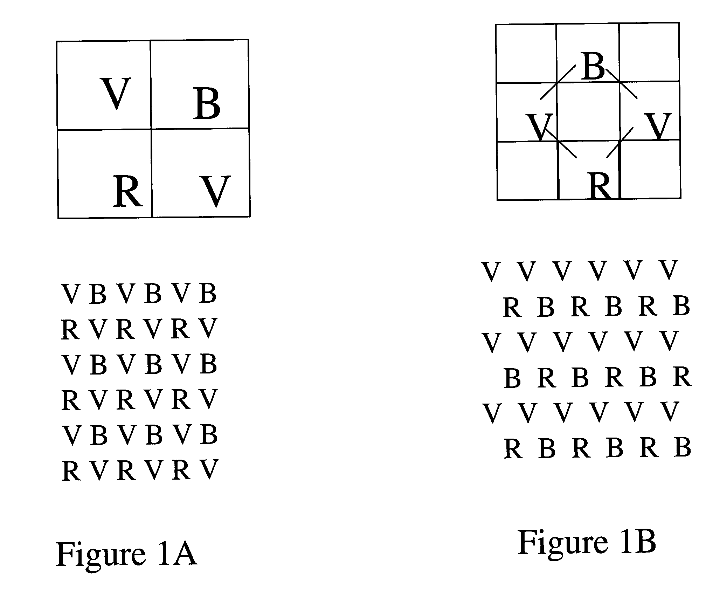

Selon le procédé de l'invention, le système d'acquisition de l'image intègre une caméra utilisant par exemple un capteur mono-CCD et une matrice de filtres de couleur rouge-vert-bleu (R-V-B) de Bayer dont deux exemples de motifs élémentaires sont donnés figure 1. Ce motif se répète pour former le champ d'acquisition.

Les images ainsi obtenues ne comportent en chaque pixel qu'une seule des trois composantes (R-V-B). Le dématriçage consiste alors à interpoler les deux composantes absentes à partir des valeurs fournies par le capteur.

Dans toute la suite, on appellera composante sur-échantillonnée dans un motif particulier, la composante de couleur de plus grande fréquence à l'intérieur d'un motif. Par opposition, les composantes moins fréquentes seront appelées composantes sous-échantillonnées. Dans les exemples de motifs figure 1, la composante sur-échantillonnée est la composante verte alors que les composantes bleue et rouge sont sous-échantillonnées.

Dans toute la suite, il est bien entendu que le procédé ne dépend pas des fréquences d'échantillonnage de chaque couleur, ni des couleurs sous-échantillonnées (ici rouge et bleu) ou sur-échantillonnées (ici le vert), ni des couleurs elles-mêmes.

Le procédé s'applique par exemple aussi bien à un motif élémentaire en quinconce pour se référer à la position des composantes vertes comme sur la figure 1A ou à un motif élémentaire dit droit comme sur la figure 1B.

En effet, un aspect important de ces décompositions en motif est la disposition des composantes sur-échantillonnées (ici le vert). Dans le motif 1A, ces composantes vertes sont organisées en quinconce et définissent donc une direction privilégiée selon un angle à 45° par rapport au mode de visualisation d'une image en ligne et en colonne. Dans le motif 1B, cette direction privilégiée est à 0°, les composantes vertes étant déjà organisées en ligne et en colonne.

Il faut noter que les motifs d'échantillonnage illustrés figure 1, pour lequel 50% de l'information provient de la composante verte est bien adapté au fait que l'oeil humain est plus sensible au vert qu'aux deux autres composantes de couleur.

Concrètement, le motif élémentaire est le moyen de faire le lien entre le flux de données issu d'un capteur et l'image correspondante. En effet, les données représentant une image arrivent pour le traitement et la visualisation sous forme d'une séquence régulièrement organisée selon le motif d'acquisition. Selon la figure 1A, les données à traiter, en numérotant les composantes, sont donc de la forme (V1-R1-V2-B1-V3-R2-V4-B4...) pour une première composante verte (V1), une première composante rouge (R1), une seconde composante verte (V2), une première composante bleue (B1).... La connaissance du flux de données et du motif associé permet donc de reconstituer l'image originelle.

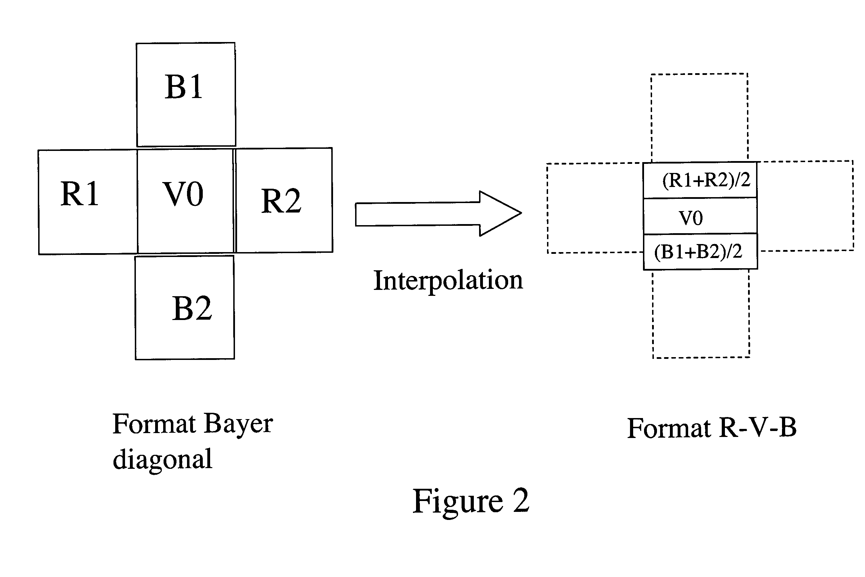

Illustré figure 2, à partir de cette matrice de motifs, ou image originelle, le procédé selon l'invention consiste à ne plus réaliser d'interpolation point par point, mais à seulement ré-échantillonner, sur la maille des échantillons verts, les composantes bleue et rouge.

Ce ré-échantillonnage est par exemple obtenu en prenant la valeur moyenne des pixels adjacents dans la composante considérée. Ainsi, en format RVB, le triplet obtenu au niveau de la composante verte V0 selon la figure 2 est (R,V,B)= ((R1+R2)/2,V0,(B1+B2)/2). Il est bien entendu que tout type d'interpolation connu peut être utilisé à ce stade du procédé.

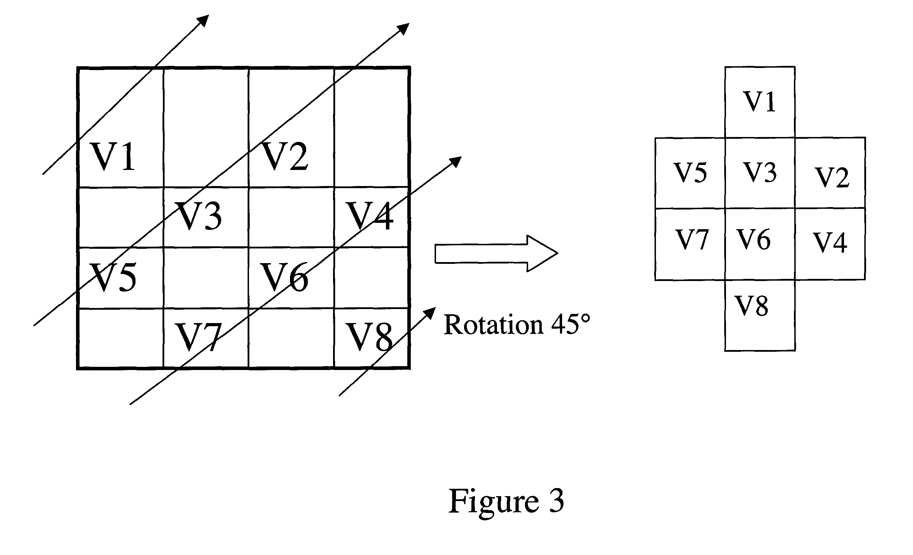

Illustré figure 3, après ré-échantillonnage, les pixels RVB résultants sont organisés selon une maille d'échantillonnage en quinconce. Afin de disposer d'une matrice droite de points (en lignes et colonnes), les pixels sont lus dans la direction privilégiée définie plus haut. Cette lecture dans une direction privilégiée correspond donc à une rotation de l'image d'un angle égal à celui que fait la direction privilégiée avec le repère défini par les outils de visualisation (45° dans le cas du motif 1A, 0° dans le cas du motif 1B)

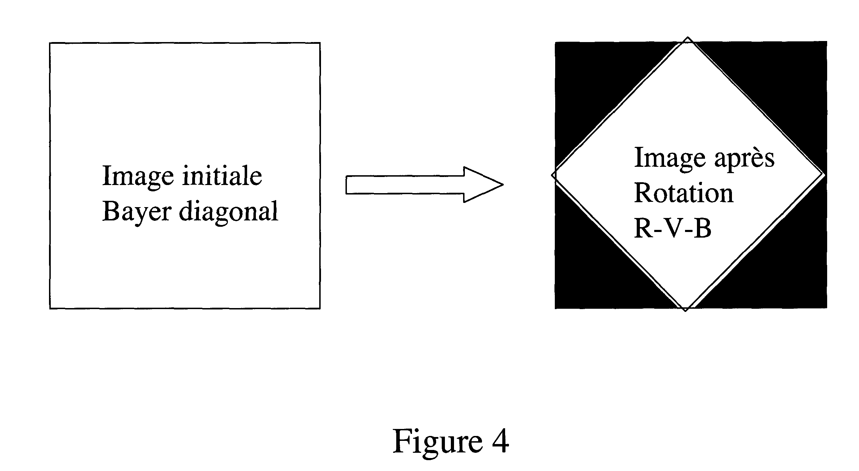

L'image obtenue est alors par exemple comme sur la figure 4. Elle a changé d'échelle d'un facteur racine de 2 et a subi une rotation de 45° dans le cas d'un motif de Bayer illustré figure 1A.

Par ailleurs, dans le cas où des points sans informations sont présents, par exemple dans le cas des coins d'une image après rotation comme sur la figure 4, on peut choisir de les remplir avec la valeur moyenne (RVB) de l'image, ce qui permet d'améliorer le rendement d'une compression ultérieure éventuelle.

Enfin, notons que ce procédé est tout à fait réversible et qu'il est possible de reconstituer l'image initiale. La qualité de l'image initiale n'est donc pas dégradée par le dématriçage selon l'invention.

En effet, les valeurs de la composantes sur-échantillonnée sont ré-ordonnées, mais ne sont pas modifiées. Dans le cas d'une image de dimensions paires, les valeurs d'origine des composantes sous-échantillonnées peuvent être recalculées par un calcul simple suivant les lignes et les colonnes de l'image. Partant des pixels de la composante sur-échantillonnée (par exemple V) situés au bord de l'image, on considère les suites de valeurs formées dans une direction oblique par rapport à la direction principale (par exemple suivant les lignes pour le format de Bayer en quinconce de la figure 1A ou suivant les diagonales pour le motif droit de la figure 1B). Pour des images de dimensions paires, le parcours à partir d'un pixel V s'effectue alternativement dans un sens puis dans l'autre. La suite de valeurs ainsi obtenues est par exemple de la forme V0 X0 V1 X1 V2 X2... où X représente l'une des deux composantes sous-échantillonnée, c'est-à-dire, par exemple, soit la composante R, soit la composante B. Elle comporte autant de pixels V et X.

Désignons alors par $x_n$ la valeur de la composante X calculée au point $V_n$ selon la méthode de dématriçage de l'invention :

$$x_0 = X_0$$

$$x_n = (X_{n-1} + X_n) / 2 \text{ pour } n > 0.$$

Notons que la division par 2 peut entraîner la perte irréversible de la valeur d'un bit si le format numérique ne garde pas au moins un bit de poids faible en réserve. Cette perte n'a pas lieu si le format permet un bit de poids faible en réserve.

La formule suivante :

$$X_n = (-1)^n \left[ 2 \sum_{i=0}^{n} (-1)^i x_i - x_0 \right]$$

permet alors de restituer les composantes Xn après dématriçage selon l'invention.

L'invention est décrite dans ce qui précède à titre d'exemple. Il est entendu que l'homme du métier est à même de réaliser différentes variantes de l'invention sans pour autant sortir du cadre du brevet.

**Revendications**

1. Procédé de dématriçage d'une image issue d'un flux de données acquises suivant un motif spécifique de composantes chromatiques et possédant au moins une composante sur-échantillonnée organisée selon au moins une direction privilégiée **caractérisé en ce qu'**il comprend au moins

   - une étape de rotation de ladite composante sur-échantillonnée selon un angle correspondant à ladite direction privilégiée ;
   - une étape de ré-échantillonnage des composantes sous-échantillonnées sur les pixels de ladite composante sur-échantillonnée.

2. Procédé de dématriçage selon la revendication 1, **caractérisé en ce que** ladite direction privilégiée correspond à un angle de 45° par rapport au repère de visualisation en ligne et en colonne.

3. Procédé de dématriçage selon la revendication 1, **caractérisé en ce que** ladite direction privilégiée correspond à un angle 0° par rapport au repère de visualisation en ligne et en colonne.

4. Procédé de dématriçage selon la revendication 1, **caractérisé en ce que**, au cas où lesdites composantes chromatiques correspondent au format Rouge-Vert-Bleu, ladite composante sur-échantillonnée est la composante verte.

5. Procédé de dématriçage selon la revendication 1, **caractérisé en ce que** ledit ré-échantillonnage des composantes sous-échantillonnées sur la composante sur-échantillonnée est une interpolation des composantes sous-échantillonnées.

EP 1 599 050 A1

|   |   |
|---|---|
| V | B |
| R | V |

V B V B V B
R V R V R V
V B V B V B
R V R V R V
V B V B V B
R V R V R V

Figure 1A

|   | B |   |
|---|---|---|
| V |   | V |
|   | R |   |

V V V V V V
R B R B R B
V V V V V V
B R B R B R
V V V V V V
R B R B R B

Figure 1B

Format Bayer diagonal → Interpolation → Format R-V-B

Figure 2

EP 1 599 050 A1

| V1 | | V2 | |
|----|----|----|----|
| | V3 | | V4 |
| V5 | | V6 | |
| | V7 | | V8 |

Rotation 45°

|  | V1 |  |
|------|------|------|
| V5 | V3 | V2 |
| V7 | V6 | V4 |
|  | V8 |  |

Figure 3

EP 1 599 050 A1

Image initiale
Bayer diagonal

$\Rightarrow$

Image après
Rotation
R-V-B

Figure 4

**Office européen
des brevets**

**RAPPORT DE RECHERCHE EUROPEENNE**

Numéro de la demande

EP 04 29 1269

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 5 805 217 A (LU NING ET AL) 8 septembre 1998 (1998-09-08) * colonne 4, ligne 35 - colonne 5, ligne 3; figure 3 * ----- | 1 | H04N9/04 |
| X | US 4 642 678 A (COK DAVID R) 10 février 1987 (1987-02-10) * colonne 2, ligne 38 - ligne 68; figures 2,3 * ----- | 1 | |

|  |
|---|
| DOMAINES TECHNIQUES RECHERCHES (Int.Cl.7) |
| H04N |

Le présent rapport a été établi pour toutes les revendications

| Lieu de la recherche | Date d'achèvement de la recherche | Examinateur |
|---|---|---|
| La Haye | 14 octobre 2004 | Bequet, T |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons
........................................................................................
& : membre de la même famille, document correspondant

EPO FORM 1503 03.82 (P04C02)

9

**ANNEXE AU RAPPORT DE RECHERCHE EUROPEENNE**
**RELATIF A LA DEMANDE DE BREVET EUROPEEN NO.**

EP 04 29 1269

14-10-2004

| Document brevet cité au rapport de recherche | | Date de publication | Membre(s) de la famille de brevet(s) | | Date de publication |
|---|---|---|---|---|---|
| US 5805217 | A | 08-09-1998 | AU | 3393197 A | 07-01-1998 |
| | | | WO | 9748075 A1 | 18-12-1997 |
| US 4642678 | A | 10-02-1987 | DE | 3577962 D1 | 28-06-1990 |
| | | | EP | 0192736 A1 | 03-09-1986 |
| | | | JP | 61501424 T | 10-07-1986 |
| | | | WO | 8601965 A2 | 27-03-1986 |

EPO FORM P0460